(19) Europäisches Patentamt
European Patent Office
Office européen des brevets

(11) EP 3 047 562 B1

(12) **FASCICULE DE BREVET EUROPEEN**

(45) Date de publication et mention
de la délivrance du brevet:
**14.08.2019 Bulletin 2019/33**

(21) Numéro de dépôt: **14784283.5**

(22) Date de dépôt: **12.09.2014**

(51) Int Cl.:
*H02M 1/12* (2006.01)      *H02J 7/02* (2016.01)
*B60L 53/20* (2019.01)

(86) Numéro de dépôt international:
**PCT/FR2014/052267**

(87) Numéro de publication internationale:
**WO 2015/040311 (26.03.2015 Gazette 2015/12)**

(54) **DISPOSITIF DE CHARGE D'UNE BATTERIE DE VEHICULE AUTOMOBILE PERMETTANT DE COMPENSER LES HARMONIQUES, VEHICULE AUTOMOBILE DOTE D'UN TEL DISPOSITIF DE CHARGE ET PROCEDE DE CHARGE CORRESPONDANT**

VORRICHTUNG ZUM LADEN EINER KRAFTFAHRZEUGBATTERIE ZUR KOMPENSATION VON OBERSCHWINGUNGEN, MIT SOLCH EINER VORRICHTUNG AUSGERÜSTETES KRAFTFAHRZEUG SOWIE ENTSPRECHENDES LADEVERFAHREN

DEVICE FOR CHARGING AN AUTOMOTIVE VEHICLE BATTERY MAKING IT POSSIBLE TO COMPENSATE FOR THE HARMONICS, AUTOMOTIVE VEHICLE FURNISHED WITH SUCH A CHARGING DEVICE AND CORRESPONDING METHOD OF CHARGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2013 FR 1358969**

(43) Date de publication de la demande:
**27.07.2016 Bulletin 2016/30**

(73) Titulaire: **Renault S.A.S.**
**92100 Boulogne-Billancourt (FR)**

(72) Inventeurs:
• **MERIENNE, Ludovic**
**F-91190 Gif sur Yvette (FR)**

• **KVIESKA, Pedro**
**F-78000 Versailles (FR)**

(56) Documents cités:
**WO-A2-2010/119097      FR-A1- 2 943 188**
**FR-A1- 2 964 510**

• **KHAN I A: "Battery chargers for electric and hybrid vehicles", POWER ELECTRONICS IN TRANSPORTATION, 1994. PROCEEDINGS DEARBORN, MI, USA 20-21 OCT. 1994, NEW YORK, NY, USA,IEEE, 20 octobre 1994 (1994-10-20), pages 103-112, XP010203091, DOI: 10.1109/PET.1994.572365 ISBN: 978-0-7803-1839-7**

Printed by Jouve, 75001 PARIS (FR)

**Description**

L'invention concerne un dispositif de charge d'une batterie et, plus particulièrement, un dispositif de charge destiné à être intégré à un véhicule automobile à traction au moins partiellement électrique pour permettre une recharge de la batterie du véhicule directement à partir d'un réseau d'alimentation électrique.

Dans des systèmes de recharge de batterie à haute tension, la puissance électrique du réseau est amenée à la batterie successivement au travers de deux convertisseurs : un abaisseur de tension (« buck ») et un élévateur de tension (« boost »). Ces deux convertisseurs permettent respectivement d'abaisser et d'élever le rapport de tension entre leur borne de sortie et leur borne d'entrée, en ouvrant et en fermant successivement une série d'interrupteurs, à une fréquence qui est commandée en fonction du courant de sortie, et/ou de la tension de sortie souhaitée.

De tels systèmes de recharge sont par exemple décrits dans la demande de brevet FR 2 943 188, qui porte sur un système de recharge embarqué pour véhicule automobile, permettant un rechargement d'une batterie du véhicule à partir d'un circuit triphasé ou monophasé, le circuit de recharge intégrant les bobines d'une machine électrique qui assure par ailleurs d'autres fonctions, comme la génération de courant ou la propulsion du véhicule.

On pourra également se référer au document FR 2 964 510 qui décrit la recharge d'une batterie à partir d'un circuit triphasé et au document FR 2 974 253 qui décrit la recharge d'une batterie à partir d'une alimentation monophasée et qui décrit en outre une architecture permettant de contrôler la puissance de charge.

Le hachage du courant tiré du réseau d'alimentation engendré par le fonctionnement de l'étage abaisseur de tension induit des composantes à haute fréquence dans le courant prélevé, c'est-à-dire des harmoniques d'ordre supérieur au fondamental du réseau de distribution qui est classiquement à 50 Hz.

Les distributeurs d'électricité imposant une norme sur les harmoniques du courant prélevé, un tel système de recharge comporte également un filtre de type RLC (Résistif-Inductif-Capacitif) à l'entrée de l'abaisseur de tension.

Un tel filtre d'entrée permet de filtrer le courant absorbé de sorte qu'il satisfasse aux contraintes de raccordement au réseau imposées par les exploitants de réseaux, en termes d'harmoniques, ainsi que celles du domaine automobile.

Un tel filtre d'entrée est également conçu pour permettre le bon fonctionnement en puissance du chargeur.

Il n'est en réalité pas adapté pour absorber le contenu harmonique renvoyé par le dispositif de charge au réseau. En d'autres termes, le courant renvoyé n'est pas parfaitement sinusoïdal. Le filtre est en fait seulement adapté pour absorber le contenu harmonique généré à une fréquence prédéterminée, en l'espèce de 10 kHz, par le hachage des courants dans l'étage abaisseur de tension.

Le but de l'invention est ainsi de proposer un dispositif de charge d'une batterie adapté pour pouvoir être connecté à un réseau d'alimentation électrique et capable de s'opposer à l'apparition d'un contenu harmonique dans le réseau d'alimentation.

L'invention a donc pour objet, selon un premier aspect, un dispositif de charge d'une batterie, notamment d'une batterie de véhicule automobile à traction au moins partiellement électrique, comprenant un étage de filtrage destiné à être raccordé à un réseau d'alimentation, un étage abaisseur de tension raccordé à l'étage de filtrage, un étage élévateur de tension couplé à l'étage abaisseur de tension et destiné à être raccordé à la batterie et une unité de régulation apte à imposer des rapports cycliques de hachage à l'étage abaisseur de tension et à l'étage élévateur de tension.

L'unité de régulation comprend des moyens de compensation des harmoniques engendrées par l'étage abaisseur de tension dans l'étage de filtrage, agissant sur l'étage abaisseur de tension.

Selon une autre caractéristique de l'invention, l'unité de régulation comprend un régulateur principal apte à déterminer un rapport cyclique d'un signal de commande de commutation de l'étage abaisseur de tension, et un régulateur secondaire de compensation des harmoniques apte à déterminer un rapport cyclique d'un signal de compensation d'harmoniques combiné audit signal de commande.

Le régulateur secondaire est par exemple associé à un comparateur apte à comparer le courant prélevé sur le réseau et un courant idéal compensé pour élaborer le rapport cyclique du signal de compensation à partir du résultat de ladite comparaison.

Le courant idéal compensé peut être élaboré à partir d'une boucle à verrouillage de phase.

Le régulateur secondaire comporte un filtre elliptique assurant le filtrage du résultat de ladite comparaison et associé à un étage d'amplification à gain réglable dont la sortie est raccordée à un diviseur de courant de sorte que le rapport cyclique $\alpha_{harm}$ du signal de compensation est élaboré à partir de la relation :

$$\alpha_{harm} = \frac{K_p \, \Delta I_{filtré}}{I_n}$$

dans laquelle Kp désigne le gain réglable,
$\Delta I_{filtré}$ est la sortie du filtre elliptique, et
$I_n$ est le courant de sortie de l'étage abaisseur de tension.

L'invention a également pour objet, selon un autre aspect, un véhicule automobile à traction au moins partiellement électrique, comportant un dispositif de charge tel que défini ci-dessus.

L'invention a encore pour objet, selon un troisième aspect, un procédé de charge d'une batterie, notamment d'une batterie de véhicule automobile à traction au moins partiellement électrique, dans lequel on filtre le courant délivré par un réseau d'alimentation électrique et l'on amène la puissance électrique du réseau à la batterie via un étage abaisseur de tension et un étage élévateur de tension tout en pilotant le rapport cyclique de hachage desdits étages abaisseur et élévateur de tension.

Selon une caractéristique générale de ce procédé, on compense les harmoniques engendrées par l'étage abaisseur de tension dans un étage de filtrage du courant délivré par le réseau.

Dans un mode de mise en oeuvre, ladite compensation des harmonique est mise en oeuvre en combinant une régulation principale apte à déterminer un rapport cyclique d'un signal de commande de commutation de l'étage abaisseur de tension et une régulation secondaire de compensation des harmoniques, la régulation secondaire étant mise en oeuvre à partir d'une comparaison entre le courant délivré par le réseau et un courant idéal compensé.

Le courant idéal compensé est par exemple élaboré à partir d'une mesure de la pulsation du courant du réseau.

Le résultat de ladite comparaison est filtré par un filtre elliptique, amplifié par un amplificateur de gain variable puis divisé par le courant de sortie de l'étage abaisseur de tension.

D'autres buts, caractéristiques et avantages de l'invention apparaîtront à la lecture de la description suivante, donnée uniquement à titre d'exemple non limitatif, et faite en référence aux dessins annexés sur lesquels :

- La figure 1 illustre un dispositif de recharge d'une batterie selon un mode de réalisation de l'invention ;
- La figure 2 est un schéma illustrant, de manière générale, la structure de l'unité de régulation ;
- La figure 3 montre des courbes illustrant l'élaboration du courant idéal ;
- La figure 4 est un schéma illustrant un mode de réalisation de l'unité de régulation ;
- Les figures 5 et 6 montrent des courbes illustrant le fonctionnement du filtre elliptique.

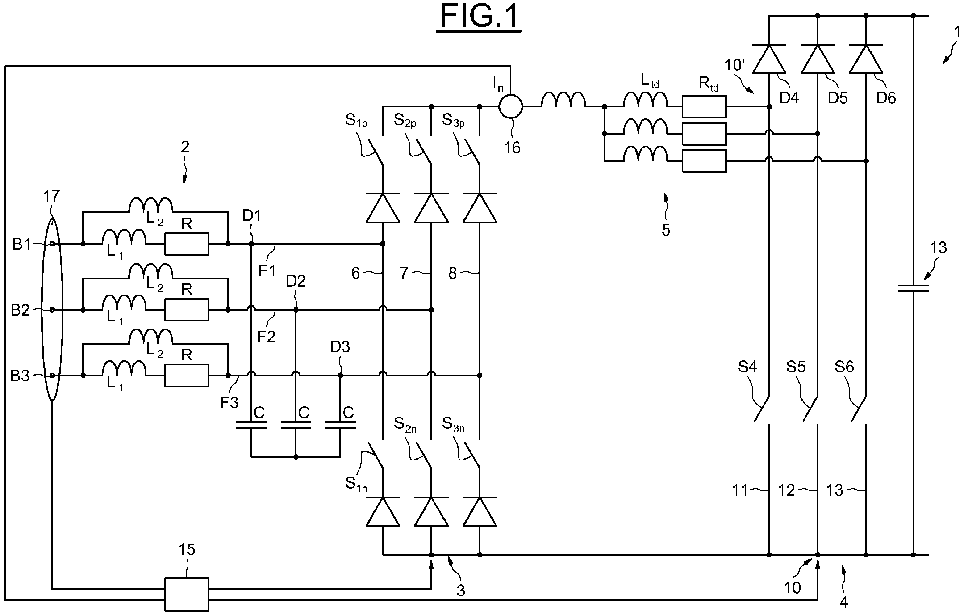

Sur la figure 1, est présenté de manière schématique un dispositif de charge d'une batterie d'un véhicule automobile à traction électrique à partir d'un réseau d'alimentation triphasé, selon un mode de réalisation.

Le dispositif de recharge 1 comprend un étage de filtrage 2, un étage abaisseur de tension 3 couplé à l'étage de filtrage 2, et un étage élévateur de tension 4 couplé à l'étage abaisseur de tension 3 via une machine électrique 5.

Le dispositif 1 est ici, par exemple, destiné à être couplé à une alimentation triphasée. Il comprend trois bornes $B_1$, $B_2$, $B_3$ couplées en entrée de l'étage de filtrage 2, et aptes à être couplées à un réseau d'alimentation. On notera toutefois qu'en recharge monophasée, seules les entrées $B_1$ et $B_2$ sont couplées à un réseau d'alimentation monophasé.

Chaque borne d'entrée $B_1$, $B_2$ et $B_3$ est couplée à une branche de filtrage de l'étage de filtrage 2. Chaque branche de filtrage comprend deux branches en parallèle, portant l'une une inductance de valeur $L_2$ et l'autre portant en série une inductance de valeur $L_1$ et une résistance de valeur R.

Ces deux branches de filtrage sont chacune couplées en sortie à un condensateur de capacité C par exemple couplé à la masse, en un point respectivement nommé $D_1$, $D_2$, $D_3$ pour chacune des branches de filtrage. L'ensemble des résistances de valeurs R, des inductances de valeurs $L_1$ ou $L_2$, et des condensateurs de capacité C constitue un filtre de type RLC à l'entrée de l'abaisseur de tension 3.

L'étage abaisseur de tension 3 est couplé à l'étage de filtrage 2 par les points $D_1$, $D_2$ et $D_3$. L'abaisseur de tension 3 comprend trois branches parallèles 6, 7 et 8, portant chacune deux interrupteurs tels que $S_{1n}$ et $S_{1p}$ commandés par une unité de régulation 15 et deux diodes.

Chaque entrée $D_1$, $D_2$ ou $D_3$ de l'abaisseur de tension est connectée, respectivement par une branche $F_1$, $F_2$ et $F_3$ à un point de connexion situé entre deux interrupteurs tels que $S_{1n}$ ou $S_{1p}$ d'une même branche respectivement 6, 7 et 8.

Les extrémités communes des branches 6, 7 et 8 constituent deux bornes de sortie de l'abaisseur de tension 3. L'une des bornes est reliée à la borne « - » de la batterie 13 ainsi qu'à une première entrée 10 de l'étage élévateur de tension 4. L'autre de ces bornes est connectée à une première borne d'une machine électrique 5, dont l'autre borne est connectée à une seconde entrée 10' de l'élévateur de tension 4.

L'étage élévateur de tension 4 comprend ici trois branches parallèles 11, 12 et 13 comprenant chacune une diode $D_4$, $D_5$ et $D_6$ associée à un interrupteur $S_4$, $S_5$ et $S_6$ pilotables par l'unité de régulation 15 de manière indépendante. Ces interrupteurs $S_4$, $S_5$ et $S_6$ sont situés sur une branche reliant la première entrée 10 de l'élévateur de tension 4 et la borne « + » de la batterie 13.

Comme on le voit, la batterie 13 est connectée en parallèle sur les trois branches 11, 12 et 13 de l'étage élévateur de tension.

La machine électrique 5 est ici assimilable à trois branches parallèles comprenant chacune une résistance $R_{td}$ en série avec une bobine d'inductance $L_{td}$ et raccordée entre la diode $D_4$, $D_5$ ou $D_6$ et l'interrupteur pilotable $S_4$, $S_5$ et $S_6$ correspondant des branches respectives 11, 12 et 13.

On voit enfin sur la figure 1 que le dispositif de recharge 1 est complété par un organe 16 de mesure du courant de sortie $I_N$ de l'étage abaisseur de tension 3. Ce courant $I_N$, désigné par la suite par le terme de courant de neutre en raison du fait que ce courant arrive au niveau d'une interconnexion en étoile des trois bobinages statoriques de la machine électrique 5, en sortie de l'étage abaisseur 3.

Le dispositif de recharge est encore complété par un organe 17 de mesure du courant prélevé sur le réseau.

Comme cela sera décrit en détail par la suite, ces courants de mesure sont délivrés à l'unité de régulation 15 pour, notamment, assurer une compensation des harmoniques créées lors du fonctionnement de l'étage abaisseur 3 et susceptibles d'être injectés dans le réseau après avoir été amplifiés par le filtre d'entrée 2.

En fonctionnement, l'unité de régulation 15 détermine, comme cela est connu, le rapport cyclique de signaux de commande de commutation des interrupteurs des étages abaisseurs et élévateurs de tension, constitués par exemple par des transistors. Il s'agit de préférence de transistors permettant une commutation rapide, par exemple des transistors de type IGBT (Insulation Gate Bipolar Transistor).

L'unité de régulation 15 peut, par exemple, comprendre un premier module de contrôle permettant de déterminer le rapport cyclique de hachage de l'étage abaisseur de tension et un second module de contrôle permettant de déterminer une consigne de rapport cyclique de hachage de l'étage élévateur de tension.

Comme cela est connu, pour évaluer les rapports cycliques, l'unité de régulation reçoit par exemple en entrée les valeurs de la tension d'alimentation du réseau, de l'intensité du courant traversant la machine électrique, de la tension de la batterie 13 et de l'intensité du courant traversant la batterie.

En ce qui concerne le module de contrôle dédié au pilotage de l'étage abaisseur de tension 3, l'unité de régulation 15 pilote les interrupteurs de cet étage abaisseur de manière à réduire, voire annuler les harmoniques engendrées lors du hachage.

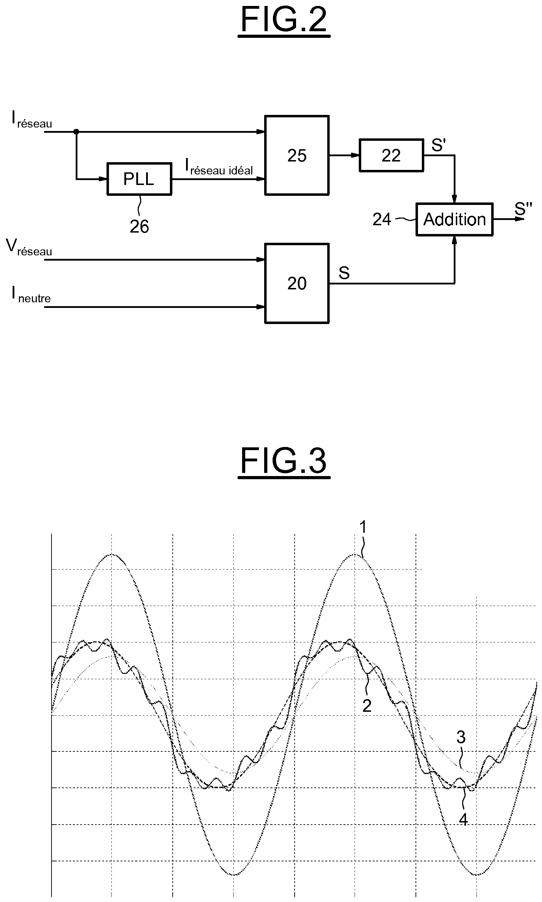

On a représenté sur la figure 2 un exemple de réalisation du premier module de l'unité de régulation permettant de déterminer le rapport cyclique de hachage de l'étage abaisseur de tension.

Comme on le voit, l'unité de régulation comporte un régulateur principal 20 recevant, en entrée, une valeur de mesure de la tension $V_{réseau}$ du réseau et du courant de neutre $I_{neutre}$ pour élaborer un signal S de commande de commutation de l'étage abaisseur de tension, de manière connue en soi.

L'unité de régulation comporte par ailleurs un régulateur secondaire 22 de compensation des harmoniques destiné à évaluer le rapport cyclique d'un signal S' de compensation d'harmoniques destiné à être combiné au signal S de commande de commutation au moyen d'un additionneur 24 pour élaborer un signal de commande S" final.

Comme on le voit, le régulateur secondaire 22 assure la comparaison entre la valeur du courant du $I_{réseau}$ et la valeur d'un courant idéal $I_{réseau}$ idéal au moyen d'un soustracteur 25.

On se référera à présent à la figure 3, sur laquelle la courbe 1 représente la tension du réseau, la courbe 2 désigne le courant prélevé sur le réseau, la courbe 3 désigne le courant désiré et la courbe 4 désigne le courant du réseau idéal.

On voit que, pour les raisons exposées précédemment, le courant prélevé sur le réseau n'est pas purement sinusoïdal à 50 Hertz en raison de son contenu harmonique.

A partir de ce courant $I_{réseau}$, on utilise une boucle à verrouillage de phase PLL 26 qui permet d'extraire la pulsation wt du courant du réseau, mesuré par l'organe de mesure 17 pour élaborer le courant $I_{réseau}$ idéal (courbe 4).

Ainsi, à partir du résultat de la soustraction mise en oeuvre par le soustracteur 25, le régulateur secondaire est capable d'élaborer le signal S" de compensation permettant d'ajouter une composante curative au signal de commande S issu du régulateur principal 20 et réduire de la sorte le contenu harmonique du réseau.

On notera que, pour cela, l'unité de régulation tient avantageusement compte du passage par l'étage de filtrage 2.

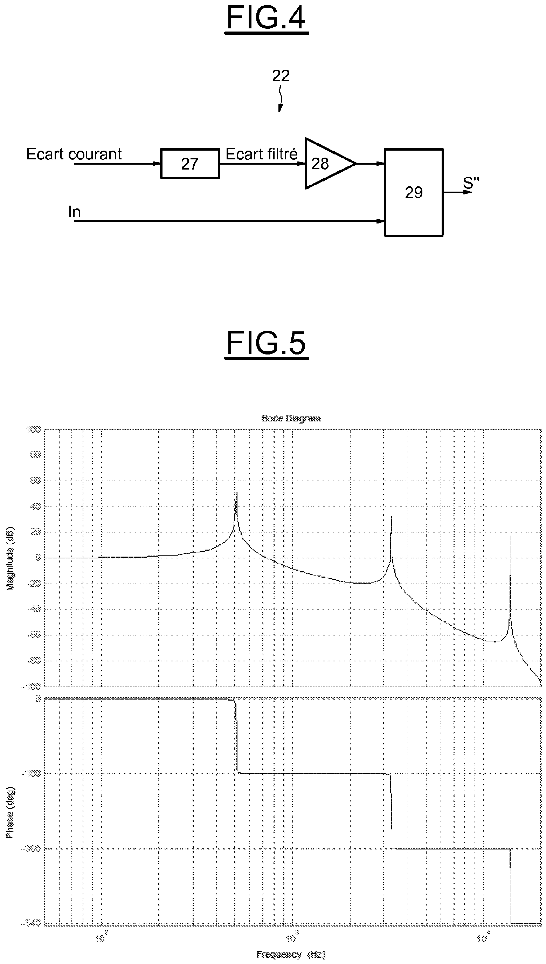

Dans ce but, et comme visible sur la figure 4, le régulateur secondaire 22 comporte un filtre elliptique d'entrée 27 recevant, en entrée, le résultat de la comparaison délivré par le soustracteur 25 et un étage amplificateur à gain variable 28 recevant en entrée le résultat de la comparaison filtré et dont la sortie est raccordée à un diviseur 29 assurant la division entre la sortie de l'étage d'amplification 28 à gain variable et la valeur de mesure du courant de neutre fournie par l'organe de mesure 16 pour fournir le signal S" de compensation d'harmoniques.

En d'autres termes, le rapport cyclique $\alpha_{harm}$ du signal de compensation d'harmoniques S" est élaboré à partir de la relation suivante :

$$\alpha_{harm} = \frac{K_p \, \Delta I_{filtré}}{I_n}$$

dans laquelle :

Kp désigne le gain réglable de l'étage d'amplification 28 ;
$\Delta I_{filtré}$ est la sortie du filtre elliptique 27 ; et
$I_n$ est le courant de sortie de l'étage abaisseur de tension.

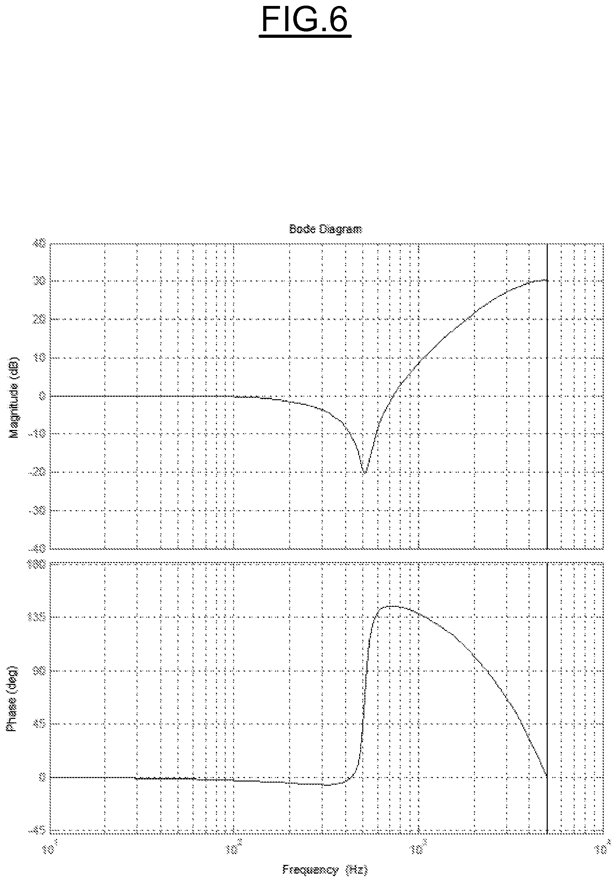

L'avantage de l'utilisation du filtre elliptique apparaitra à l'examen des figures 5 et 6.

La figure 5 montre le diagramme de Bode traduisant la modification du courant entre l'étage de filtrage 2 et l'étage abaisseur 3 due à la modification de la commande de l'étage abaisseur de tension pour compenser les harmoniques.

On constate une inversion de phase autour de 500 Hertz, ce qui signifie qu'un simple correcteur proportionnel n'est pas optimal pour mettre en oeuvre le régulateur secondaire 22.

En effet, un tel correcteur pourrait certes compenser les harmoniques inférieures à 500 Hertz mais, au-delà, il les empirerait.

Pour pouvoir agir sur l'ensemble des harmoniques du réseau, on utilise le filtre elliptique 27 permettant d'éviter l'inversion de phase au-delà de 500 Hertz. On a représenté sur la figure 6 ledit diagramme de Bode d'un tel filtre.

**Revendications**

1. Dispositif de charge d'une batterie, notamment d'une batterie de véhicule automobile à traction au moins partiellement électrique, comprenant un étage de filtrage (2) destiné à être raccordé à un réseau d'alimentation électrique, un étage abaisseur de tension (3) raccordé à l'étage de filtrage, un étage élévateur de tension (4) couplé à l'étage abaisseur de tension et destiné à être raccordé à la batterie (13) et une unité de régulation (15) apte à imposer des rapports cycliques de hachage à l'étage abaisseur de tension (3) et à l'étage élévateur de tension (4), **caractérisé en ce que** l'unité de régulation comprend des moyens (22) de compensation des harmoniques engendrées par l'étage abaisseur de tension dans l'étage de filtrage, agissant sur l'étage abaisseur de tension,

   l'unité de régulation comprenant un régulateur principal (20) apte à déterminer un rapport cyclique d'un signal de commande (S) de commutation de l'étage abaisseur de tension et un régulateur secondaire (22) de compensation des harmoniques apte à déterminer un rapport cyclique d'un signal de compensation (S') d'harmoniques combiné audit signal de commande,

   le régulateur secondaire (22) étant associé à un comparateur (25) apte à comparer le courant prélevé sur le réseau ($I_{réseau}$) et un courant idéal compensé ($I_{réseau\ idéal}$) pour élaborer le rapport cyclique du signal de compensation (S') à partir du résultat de ladite comparaison, le courant idéal compensé étant élaboré à partir d'une boucle à verrouillage de phase (26),

   le régulateur secondaire comportant un filtre elliptique (27) assurant le filtrage du résultat de ladite comparaison associé à un étage d'amplification (28) à gain réglable dont la sortie est raccordée à un diviseur de courant (29) de sorte que le rapport cyclique ($\alpha_{harm}$) de signal de compensation est élaboré à partir de la relation :

$$\alpha_{harm} = \frac{K_p\ \Delta I_{filtré}}{I_n}$$

   dans laquelle :

   Kp désigne le gain réglable ;
   $\Delta I_{filtré}$ est la sortie du filtre elliptique ; et
   $I_n$ est le courant de sortie de l'étage abaisseur de tension (3).

2. Véhicule automobile à traction au moins partiellement électrique, **caractérisé en ce qu'**il comporte un dispositif de charge selon la revendication 1.

3. Procédé de charge d'une batterie, notamment d'une batterie de véhicule automobile à traction au moins partiellement électrique, dans lequel on filtre le courant délivré par un réseau d'alimentation électrique et l'on amène la puissance électrique du réseau à la batterie via un étage abaisseur de tension (3) et un étage élévateur de tension (4) tout en pilotant les rapports cycliques de hachage desdits étages abaisseur et élévateur de tension, **caractérisé en ce que** l'on compense les harmoniques engendrées par l'étage abaisseur de tension dans un étage de filtrage du courant délivré par le réseau,

   ladite compensation des harmoniques étant mise en oeuvre en combinant une régulation principale apte à déterminer un rapport cyclique d'un signal de commande de commutation de l'étage abaisseur de tension et une régulation secondaire de compensation des harmoniques, la régulation secondaire étant mise en oeuvre à partir d'une comparaison entre le courant délivré par le réseau et un courant idéal compensé élaboré à partir d'une mesure de la pulsation du courant du réseau, le résultat de ladite comparaison étant filtré par un filtre elliptique (27) amplifié par un amplificateur à gain variable (28) puis divisé par le courant (In) de sortie de l'étage abaisseur de tension, de sorte qu'un rapport cyclique ($\alpha_{harm}$) de signal de compensation est élaboré à partir de la relation :

$$\alpha_{harm} = \frac{K_p\ \Delta I_{filtré}}{I_n}$$

   dans laquelle :

   Kp désigne le gain réglable ;
   $\Delta I_{filtré}$ est la sortie du filtre elliptique ; et
   $I_n$ est le courant de sortie de l'étage abaisseur de tension (3).

**Patentansprüche**

1. Vorrichtung zum Laden einer Batterie, insbesondere einer Batterie eines Kraftfahrzeugs mit zumindest teilweise elektrischem Antrieb, die eine Filterstufe (2), die dazu bestimmt ist, an ein Stromversorgungsnetz angeschlossen zu werden, eine an die Filterstufe angeschlossene Spannungsabwärtswandlerstufe (3), eine Spannungsaufwärtswandlerstufe (4), die mit der Spannungsabwärtswandlerstufe gekoppelt und dazu bestimmt ist, an die Batterie (13) angeschlossen zu werden, und eine Regelungseinheit (15) enthält, die der Spannungsabwärtswandlerstufe (3) und der Spannungsaufwärtswandlerstufe (4) Zerhacker-Tastverhältnisse vorgeben kann, **dadurch gekennzeichnet, dass** die Regelungseinheit Einrichtungen (22) zur Kompensation der von der Spannungsabwärtswandlerstufe in der Filterstufe erzeugten Harmonischen enthält, die auf die Spannungsabwärtswandlerstufe einwirken,

   wobei die Regelungseinheit einen Hauptregler (20), der ein Tastverhältnis eines Steuersignals (S) zur Umschaltung der Spannungsabwärtswandlerstufe bestimmen kann, und einen Sekundärregler (22) zur Kompensation der Harmonischen enthält, der ein Tastverhältnis eines Kompensationssignals (S') von Harmonischen kombiniert mit dem Steuersignal bestimmen kann,

   wobei der Sekundärregler (22) einem Komparator (25) zugeordnet ist, der den im Netz entnommenen Strom ($I_{réseau}$) und einen kompensierten idealen Strom ($I_{réseau\ ideal}$) vergleichen kann, um das Tastverhältnis des Kompensationssignals (S') ausgehend vom Ergebnis des Vergleichs zu erarbeiten, wobei der kompensierte ideale Strom ausgehend von einer Phasenregelschleife (26) erarbeitet wird, wobei der Sekundärregler ein die Filterung des Ergebnisses des Vergleichs gewährleistendes elliptisches Filter (27) aufweist, das einer Verstärkungsstufe (28) mit variabler Verstärkung zugeordnet ist, deren Ausgang an einen Stromteiler (29) angeschlossen ist, so dass das Kompensationssignal-Tastverhältnis ($\alpha_{harm}$) ausgehend von der folgenden Beziehung erarbeitet wird:

$$a_{harm} = \frac{K_p \Delta I_{filtré}}{I_n}$$

   in der:

   $K_p$ die einstellbare Verstärkung bezeichnet;
   $\Delta I_{filtré}$ der Ausgang des elliptischen Filters ist; und
   $I_n$ der Ausgangsstrom der Spannungsabwärtswandlerstufe (3) ist.

2. Kraftfahrzeug mit zumindest teilweise elektrischem Antrieb, **dadurch gekennzeichnet, dass** es eine Ladevorrichtung nach Anspruch 1 aufweist.

3. Verfahren zum Laden einer Batterie, insbesondere einer Batterie eines Kraftfahrzeugs mit zumindest teilweise elektrischem Antrieb, wobei der von einem Stromversorgungsnetz gelieferte Strom gefiltert und die elektrische Leistung des Netzes über eine Spannungsabwärtswandlerstufe (3) und eine Spannungsaufwärtswandlerstufe (4) der Batterie zugeführt wird, wobei die Zerhacker-Tastverhältnisse der Spannungsabwärtswandler- und Spannungsaufwärtswandlerstufen gesteuert werden, **dadurch gekennzeichnet, dass** die von der Spannungsabwärtswandlerstufe erzeugten Harmonischen in einer Filterstufe des vom Netz gelieferten Stroms kompensiert werden,

   wobei die Kompensation der Harmonischen durchgeführt wird, indem eine Hauptregelung, die ein Tastverhältnis eines Schaltsteuersignals der Spannungsabwärtswandlerstufe bestimmen kann, und eine Sekundärregelung der Kompensation der Harmonischen kombiniert werden, wobei die Sekundärregelung ausgehend von einem Vergleich zwischen dem vom Netz gelieferten Strom und einem kompensierten idealen Strom durchgeführt wird, der ausgehend von einer Messung der Ungleichförmigkeit des Stroms des Netzes erarbeitet wird, wobei das Ergebnis des Vergleichs von einem elliptischen Filter (27) verstärkt durch einen Verstärker mit variabler Verstärkung (28) gefiltert und dann durch den Ausgangsstrom (In) der Spannungsabwärtswandlerstufe geteilt wird, so dass ein Kompensationssignal-Tastverhältnis ($\alpha_{harm}$) ausgehend von der folgenden Beziehung erarbeitet wird:

$$a_{harm} = \frac{K_p \Delta I_{filtré}}{I_n}$$

   in der:

   $K_p$ die einstellbare Verstärkung bezeichnet;
   $\Delta I_{filtré}$ der Ausgang des elliptischen Filters ist; und
   $I_n$ der Ausgangsstrom der Spannungsabwärtswandlerstufe (3) ist.

**Claims**

1. Battery charging device, notably for a motor vehicle battery with at least partially electric traction, comprising a filtering stage (2) intended to be connected to an electrical power supply network, a voltage buck stage (3) connected to the filtering stage, a voltage boost stage (4) coupled to the voltage buck stage and intended to be connected to the battery (13) and a regulation unit (15) suitable for imposing chopping duty cycles on the voltage buck stage (3) and on the voltage boost stage (4), **characterized in that** the regulation unit comprises means (22) for compensating the harmonics generated by the voltage buck stage in the filtering stage, acting on the voltage buck stage, the regulation unit comprising a main regulator (20) suitable for determining a duty cycle of a switching control signal (S) for the voltage buck stage and a secondary regulator (22) for compensating harmonics suitable for determining a duty cycle of a harmonics compensating signal (S') combined with said control signal, the secondary regulator (22) being associated with a comparator (25) suitable for comparing the current drawn from the network ($I_{network}$) and a compensated ideal current ($I_{ideal\ network}$) for generating the duty cycle of the compensating signal (S') on the basis of the result of said comparison, the compensated ideal current being generated from a phase-locked loop (26), the secondary regulator comprising an elliptical filter (27) ensuring the filtering of the result of said comparison associated with an amplification stage (28) with adjustable gain whose output is connected to a current divider (29) such that the duty cycle ($\alpha_{harm}$) of the compensating signal is generated on the basis of the relationship:

$$\alpha_{harm} \;=\; \frac{K_p \; \Delta I_{filtered}}{I_n}$$

in which:

  Kp denotes the adjustable gain;
  $\Delta I_{filtered}$ is the output of the elliptical filter; and
  $I_n$ is the output current of the voltage buck stage (3).

**2.** Motor vehicle with at least partially electric traction, **characterized in that** it comprises a charging device according to Claim 1.

**3.** Battery charging method, notably for a battery of a motor vehicle with at least partially electric traction, in which the current delivered by an electrical power supply network is filtered and the electrical power of the network is routed to the battery via a voltage buck stage (3) and a voltage boost stage (4) while controlling the chopping duty cycles of said voltage buck and boost stages, **characterized in that** the harmonics generated by the voltage buck stage are compensated in a filtering stage for the current delivered by the network,
said compensation of the harmonics being implemented by combining a main regulation suitable for determining a duty cycle of a switching control signal for the voltage buck stage and a secondary regulation for compensating the harmonics, the secondary regulation being implemented on the basis of a comparison between the current delivered by the network and a compensated ideal current generated from a measurement of the pulsing of the network current, the result of said comparison being filtered by an elliptical filter (27) amplified by an adjustable gain amplifier (28) then divided by the output current (In) of the voltage buck stage, so that the duty cycle ($\alpha_{harm}$) of the compensating signal is generated on the basis of the relationship:

$$\alpha_{harm} \;=\; \frac{K_p \; \Delta I_{filtered}}{I_n}$$

in which:

  Kp denotes the adjustable gain;
  $\Delta I_{filtered}$ is the output of the elliptical filter; and
  $I_n$ is the output current of the voltage buck stage (3).

FIG.1

# FIG.2

# FIG.3

# FIG.4

22

Ecart courant → 27 Ecart filtré → 28 → 29 → S"

In →

# FIG.5

Bode Diagram

# FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943188
- FR 2964510
- FR 2974253